# FASCICULE DE BREVET EUROPEEN

(11) **EP 1 372 237 B1**
(45) Date de publication et mention de la délivrance du brevet: **09.11.2011**
(21) Numéro de dépôt: 03291181.0
(22) Date de dépôt: 20.05.2003
(51) Int. Cl.: H02H 9/04

(54) **Dispositif électrique comprenant deux supports et une borne de connexion reliée à un condensateur série et à un limiteur de tension**
Elektrisches Gerät mit zwei Unterlagen und Anschlussklemme verbunden mit einem Reihenkodensator und Spannungsbegrenzer
Electrical device comprising two supports and terminal connected to a series capacitor and a voltage limiter

(30) Priorité: 14.06.2002 FR 0207369
(43) Date de publication de la demande: 17.12.2003
(73) Titulaire: ST-Ericsson SA, 1228 Plan-les-Ouates, Genève (CH)
(72) Inventeur: Icher, François, 38100 Grenoble (FR); Dehos, Bruno, 38000 Grenoble (FR)
(74) Mandataire: Loisel, Bertrand

(56) Documents cités:
- US-A- 5 731 945
- US-A- 5 828 259

## Description

La présente invention concerne une protection contre des décharges électrostatiques d'un condensateur placé en série à l'entrée d'un circuit électrique. Elle concerne plus particulièrement une telle protection pour un circuit faisant partie d'un dispositif électrique comprenant des composants électroniques répartis sur deux supports.

Il est courant d'utiliser un condensateur connecté en série à certaines entrées de circuits électriques, notamment pour éliminer une éventuelle composante continue du signal électrique appliqué à cette entrée. Un tel condensateur, appelé condensateur série, est alors interposé entre une borne d'entrée dudit circuit électrique et une borne de connexion extérieure.

En fonction de leur localisation au sein d'un dispositif électrique, certaines bornes de connexion sont susceptibles de recevoir des décharges électrostatiques. Des décharges électrostatiques peuvent notamment survenir lors de manipulations du dispositif électrique par un opérateur. Elles peuvent provoquer des tensions instantanées supérieures à 2000 volts, capables d'endommager certains composants du dispositif électrique. Il est alors usuel de connecter une borne de connexion à un dispositif de protection contre les décharges électrostatiques, ou protection ESD.

Le principe d'une protection ESD consiste à ouvrir un chemin d'évacuation de charges électriques entre la borne de connexion à laquelle la protection ESD est connectée et un point de référence du circuit électrique, lorsque la tension entre ladite borne de connexion et ce point de référence dépasse un seuil prédéfini. Une protection ESD n'a aucun effet électrique en fonctionnement normal, étant alors équivalente à un circuit ouvert, mais limite la tension entre la borne de connexion et le point de référence en présence d'une décharge électrostatique. Une telle protection ESD est appelée dans la suite limiteur de tension électrique.

Pour une borne d'entrée d'un circuit électrique reliée à une borne de connexion extérieure par un condensateur série, la connexion de ladite borne de connexion extérieure à une protection ESD permet d'éviter qu'une décharge électrostatique survenant sur la borne de connexion extérieure ne provoque un claquage du condensateur série.

Un dispositif électrique comprenant une protection contre les décharges électrostatiques est décrit dans le document US-A-5828259.

Or certains dispositifs électriques comprennent plusieurs supports sur lesquels sont répartis des composants électroniques de ces dispositifs. En particulier, une borne de connexion extérieure reliée à un condensateur série tel qu'introduit précédemment peut être portée par un support qui ne porte pas lui-même de protection ESD. Ceci peut être en particulier le cas lorsque le support de la borne de connexion extérieure est constitué d'un matériau isolant.

Un but de la présente invention consiste à protéger un condensateur série relié à une borne de connexion extérieure contre des décharges électrostatiques survenant sur ladite borne de connexion extérieure, pour des dispositifs électriques comprenant plusieurs supports de composants électroniques.

L'invention concerne donc un dispositif électrique comprenant un premier support portant au moins une borne d'entrée, un circuit électrique relié à la borne d'entrée et un limiteur de tension électrique, et un second support portant au moins une borne de connexion extérieure, la borne de connexion extérieure étant reliée à la borne d'entrée par un condensateur. Selon l'invention, la liaison entre le condensateur et la borne de connexion extérieure comprend un noeud relié au limiteur de tension électrique, de façon à limiter une tension électrique entre ledit noeud et un point de référence du circuit électrique.

Ainsi, selon l'invention, une connexion électrique spécifique relie la borne de connexion extérieure située sur ledit second support à une protection ESD située sur ledit premier support, afin d'évacuer vers un point de référence du circuit des charges électriques excessives apparaissant sur la borne de connexion extérieure.

Dans un mode de réalisation particulier de l'invention, ledit noeud est relié au limiteur de tension par une première diode, et est relié en outre au point de référence par une seconde diode, la première diode ayant sa cathode connectée au limiteur de tension et son anode connectée audit noeud, et la seconde diode ayant sa cathode connectée audit noeud et son anode connectée audit point de référence.

Ce mode de liaison de la borne de connexion extérieure au limiteur de tension permet en particulier d'utiliser un même limiteur de tension pour la protection du condensateur série et pour la protection de composants disposés à d'autres bornes d'entrée dudit circuit électrique. Ainsi, le circuit peut comprendre au moins une autre borne d'entrée reliée d'une part au limiteur de tension par une troisième diode et d'autre part au point de référence par une quatrième diode, la troisième diode ayant sa cathode connectée au limiteur de tension et son anode connectée à ladite autre borne d'entrée, et la quatrième diode ayant sa cathode connectée à ladite autre borne d'entrée et son anode connectée audit point de référence.

Eventuellement, la borne d'entrée reliée au condensateur série peut elle-même être protégée de cette façon contre les effets de décharges électrostatiques. Pour cela, ladite borne d'entrée est reliée au limiteur de tension et au point de référence par des diodes respectives, connectées de la façon décrite précédemment pour une borne d'entrée quelconque du circuit électrique.

L'invention est notamment particulièrement utile pour des dispositifs électriques comprenant des premiers composants avantageusement réalisés sur un support semiconducteur et des seconds composants avantageusement réalisés sur un support isolant électrique.

Le support semiconducteur peut être en silicium, ou à base de silicium, et les premiers composants peuvent être des diodes ou des transistors réalisés sur le support semiconducteur selon les méthodes usuelles de fabrication de composants semiconducteurs. En particulier, les protections ESD à base de transistors sont usuellement élaborées sur un support semiconducteur.

Le support isolant peut être, par exemple, en verre. Des seconds composants nécessitant un support isolant pour présenter des facteurs de qualité élevés sont, par exemple, une antenne, notamment une antenne pour fréquences radio, et une bobine, ou inductance. Il peut s'agir aussi, dans certains cas, de condensateurs ou de pistes métalliques de transport rapide de signaux.

Les deux supports avec leurs composants respectifs sont alors fabriqués séparément, selon des technologies adaptées à chacun d'eux. Ils sont ensuite assemblés l'un à l'autre en réalisant des connexions électriques entre des points respectifs appariés des deux supports. Grâce à l'invention, une borne de connexion extérieure portée par le support isolant peut être reliée à une protection ESD élaborée sur le support semiconducteur en utilisant les technologies connues de réalisation de composants semiconducteurs intégrés.

D'autres particularités et avantages de la présente invention apparaîtront dans la description ci-après d'un exemple de réalisation non limitatif, en référence aux dessins annexés, dans lesquels :
- la figure 1 est un premier schéma de dispositif électrique avec protection ESD selon l'art antérieur, auquel l'invention peut être appliquée;
- la figure 2 est un second schéma de dispositif électrique avec protection ESD selon l'art antérieur, correspondant à un perfectionnement du dispositif de la figure 1 ;
- la figure 3 représente une implantation d'un dispositif électrique selon l'invention correspondant au schéma électrique de la figure 2 ;
- la figure 4 est un schéma électrique d'un montage d'évaluation de la résistance du dispositif de la figure 3 à des impulsions de courant électrique.

Des références identiques reprises dans plusieurs figures correspondent à des éléments identiques présents dans les figures concernées. Par souci de clarté, les dimensions des éléments représentés sur ces figures ne sont pas en relation avec des dimensions réelles.

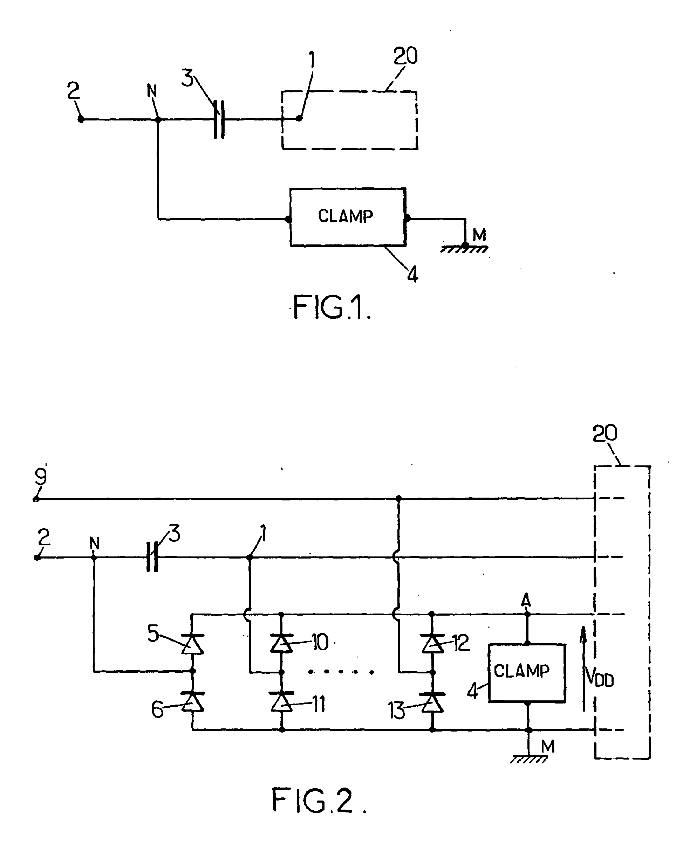

Conformément au schéma électrique de la figure 1, il est connu de relier une borne de connexion extérieure 2 à un limiteur de tension électrique 4, autrement appelé «clamp», pour limiter une tension électrique excessive pouvant apparaître entre la borne 2 et une borne de référence, provoquée par une décharge électrostatique. Couramment, ladite borne de référence est une borne de masse M.

Un circuit électrique 20 peut par ailleurs être relié par une borne d'entrée 1 de ce circuit à la borne de connexion 2. Lorsqu'il est nécessaire d'assurer que la tension appliquée à la borne d'entrée 1 ne comporte aucune composante continue, un condensateur série 3 est interposé entre la borne d'entrée 1 et la borne de connexion 2. La liaison entre la borne 2 et le limiteur de tension 4 comporte alors un noeud N auquel est relié le condensateur série 3.

La figure 2 représente une amélioration du schéma électrique de la figure 1, permettant de relier plusieurs bornes de connexion extérieure et/ou plusieurs bornes d'entrée du circuit électrique 20 à un même limiteur de tension 4, afin de protéger des composants électroniques reliés à ces bornes contre d'éventuelles décharges électrostatiques pouvant survenir sur ces dernières. Selon le schéma de la figure 2, le noeud N, la borne d'entrée 1 et une borne d'entrée supplémentaire quelconque 9 sont connectés d'une part au limiteur de tension 4 au niveau du point A représenté par des premières diodes respectives 5, 10 et 12, et d'autre part à la borne de masse M par des secondes diodes respectives 6, 11 et 13. Cette structure est adaptée en particulier lorsqu'une source (non représentée) de tension électrique positive V_{DD} est en outre connectée entre le point A et la borne de masse M, les bornes 1, 2 et 9 présentant des tensions électriques respectives par rapport à la borne de masse M positives et inférieures à V_{DD} en fonctionnement normal. Les diodes 5, 6, 10-13 sont chacune orientées pour être bloquées en fonctionnement normal du dispositif électrique, c'est-à-dire en l'absence de décharge électrostatique sur les bornes 1, 2 et 9.

Les diodes 5, 10 et 12 permettent l'évacuation vers le limiteur de tension 4 de charges électriques positives excessives amenées sur l'une au moins des bornes 1, 2 et 9 par une décharge électrostatique associée à une surtension positive par rapport à la borne de masse M. La charge électrique portée par l'armature du condensateur 3 reliée à la borne de connexion extérieure 2 est en particulier ainsi limitée, empêchant un claquage du diélectrique isolant du condensateur 3. Les diodes 6, 11 et 13 permettent l'évacuation directe vers la borne de masse M de charges électriques négatives excessives apparues sur l'une au moins des bornes 1, 2 et 9.

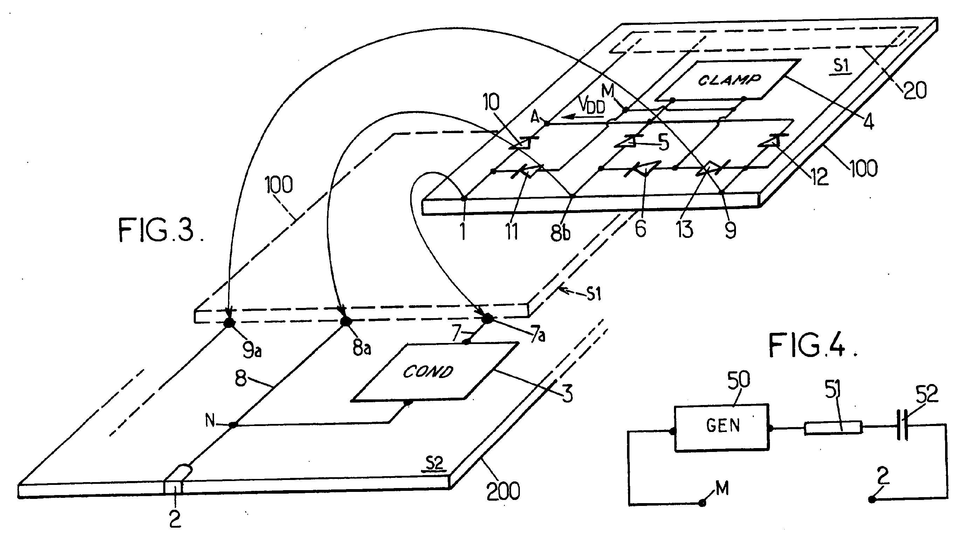

La figure 3 est un schéma d'implantation d'une réalisation de l'invention pour un dispositif électrique correspondant à la figure 2, et comprenant deux substrats différents sur lesquels sont agencés des composants électroniques. Un premier substrat plan 100, par exemple en silicium, comporte sur l'une de ses surfaces S1 des composants semiconducteurs intégrés réalisés selon les méthodes de fabrication connues de l'homme du métier. En particulier, le substrat 100 et les composants portés par ce substrat peuvent constituer un circuit intégré conçu pour exécuter une application déterminée, appelé ASIC («Application Specific Integrated Circuit»). Outre les composants nécessaires pour l'exécution de l'application, le limiteur de tension 4 et les diodes 5, 6, 10-13 sont aussi réalisés sur le substrat 100, par exemple en utilisant une technologie Bl-CMOS combinant des composants bipolaires et des transistors à effet de champ. La réalisation du limiteur de tension 4 à partir de transistors agencés pour passer d'un état bloqué à un état passant lorsque qu'une tension électrique appliquée entre deux bornes du limiteur de tension devient supérieure à un seuil déterminé est connue de l'homme de métier.

Un second substrat plan 200, par exemple en verre, porte sur l'une de ses surfaces S2 des composants électroniques réalisés par dépôts successifs de matériaux isolants et métalliques sous forme de couches superposées. Ces couches sont gravées de façon à constituer lesdits composants électroniques connectés entre eux conformément au schéma électrique de la figure 2. Ces composants électroniques peuvent inclure une antenne RF, non représentée qui présente un facteur de qualité élevé grâce à la nature isolante du substrat 200.

Le substrat 200 porte en un point de sa périphérie une zone de contact qui constitue la borne de connexion extérieure 2. La borne 2 est destinée par exemple à la réalisation d'une connexion électrique par fil métallique (ou «wire bonding») avec un support extérieur, par exemple de type PCB (ou «Printed Circuit Board»).

Dans le mode de réalisation de l'invention considéré, le condensateur série 3, relié d'une part à la borne de connexion extérieure 2 et d'autre part à la borne d'entrée 1, est porté par le substrat isolant 200. Il est constitué de portions de couches superposées formées à la surface du substrat 200, parallèles à la surface S2, comprenant deux portions de couches métalliques formant des armatures et séparées par une portion de couche diélectrique isolante. La capacité du condensateur série 3 est comprise entre 100 picofarads et 10 nanofarads, par exemple.

A la figure 3, les composants portés par les substrats 100 et 200 sont représentés schématiquement par leurs symboles électriques, sans relation avec la configuration réelle de ces composants sur les surfaces S1 et S2. Seuls les emplacements indiqués pour les bornes d'entrée 1, 2, 8b et 9 sont significatifs par rapport à une disposition réelle de ces bornes.

Le substrat 100 est disposé au dessus du substrat 200 par rapport à la surface S2, parallèlement à celle-ci et à une distance de S2 de l'ordre de 0,1 millimètre, par exemple. Les surfaces respectives S1 et S2 des substrats 100 et 200 sur lesquelles sont réalisés les composants électroniques sont placées en vis-à-vis. Afin de procurer une meilleure lisibilité à la figure 3, le substrat 100 est représenté en position retournée et déplacée à côté de son emplacement réel au dessus du substrat 200. Son emplacement réel est symbolisé par des pointillés reprenant les contours du substrat 100. Des flèches associent respectivement les trois bornes d'entrée 1, 8b et 9 portées par le substrat 100 avec trois boules de soudures 7a, 8a et 9a disposées sur la surface S2 du substrat 200, avec lesquelles les trois bornes d'entrée 1, 8b et 9 sont respectivement en contact dans la position réelle du substrat 100. Ces boules de soudure 7a, 8a et 9a sont connues sous l'appellation «bumps» et réalisent des contacts électriques entre des points respectifs des substrats 100 et 200 situés en vis-à-vis.

Dans le mode de réalisation décrit ici, des liaisons conductrices reliant respectivement la borne d'entrée 1 au condensateur 3 et le noeud N à un point du substrat 100 comprennent chacune une piste métallique, respectivement 7 et 8, formée à la surface du substrat 100. Les pistes 7 et 8 sont réalisées à la surface du substrat 200 selon l'une des méthodes connues de l'homme du métier, comprenant par exemple des étapes de gravure, de dépôt de matériau métallique et/ou de polissage.

Dans un mode de réalisation alternatif du dispositif de l'invention, le condensateur 3 est constitué d'un composant discret rapporté sur la surface du substrat 200, et connecté aux bornes 1 et 2 par des liaisons électriques adaptées pouvant être, par exemple, des fils métalliques autosupportés.

Des tests de résistance à des décharges électrostatiques ont été réalisés selon la norme « ESD Association Standard Test Method for Electrostatic Discharge (ESD) Sensitivity Testing - Human Model Component Level ESD STM 5.1 (1998)», sur un dispositif électrique tel que décrit ci-dessus en référence à la figure 3. Selon cette norme, une impulsion de courant électrique est produite par un générateur de courant relié d'une part à la borne de connexion extérieure 2 et d'autre part à la borne de masse M, selon le schéma électrique de la figure 4. Le générateur 50 est relié à la borne 2 par l'intermédiaire d'une résistance 51 de 1,5 kiloohm et d'un condensateur 52 de 100 picofarads connectés en série.

L'impulsion de courant délivrée par le générateur 50 présente une montée rapide d'intensité pendant, par exemple, 10 nanosecondes, jusqu'à une valeur instantanée maximale ajustée en fonction d'un niveau de tension de décharge requis. Ce niveau de tension de décharge doit être supérieur à 2,2 kilovolts sans que le dispositif électrique testé ne soit endommagé, afin de garantir sa résistance à des décharges électrostatiques survenant lors de manipulations du dispositif par un opérateur.

Les condensateurs série 3 des dispositifs électriques soumis au test de décharge électrostatique ont une capacité de 150 picofarads.

Pour un dispositif électrique correspondant à la figure 3 mais ne comprenant pas de liaison électrique entre le noeud N et le limiteur de tension 4, par exemple en l'absence de la piste 8, un claquage du diélectrique isolant du condensateur série 3 est systématiquement observé pour des impulsions de courant associées à des niveaux de tension de décharge supérieurs à 250 volts.

Lorsque le dispositif électrique comprend une liaison électrique entre le noeud N et le limiteur de tension 4, telle que représentée sur la figure 3, des décharges électrostatiques positives apportées par le générateur 50 sur la borne de connexion extérieure 2 sont évacuées par le limiteur de tension 4 vers la borne de masse M. A titre d'exemple, pour un limiteur de tension 4 ayant tension de seuil de 3 volts, la tension électrique entre la borne de connexion extérieure 2 et la borne de masse M atteint une valeur maximale de 6,3 volts lors de décharges électrostatiques correspondant à un niveau de tension de 880 volts. L'écart entre cette valeur maximale de tension et le seuil du limiteur de tension 4 est dû à une tension d'environ 0,7 volt aux bornes de la diode 5 lorsque celle-ci est traversée par le courant de décharge, ainsi qu'à une tension développée au sein des liaisons électriques traversées par le courant de décharge, notamment la piste 8. Simultanément, la tension entre la borne d'entrée 1 et la borne de masse M atteint une valeur maximale d'environ 3,8 volts. Ces faibles valeurs maximales atteintes par les tensions électriques entre la borne de connexion 2 et la borne de masse M d'une part et entre la borne d'entrée 1 et la borne de masse M d'autre part assurent la préservation du diélectrique isolant du condensateur série 3.

## Revendications

1. Dispositif électrique comprenant un premier support (100) portant au moins une borne d'entrée (1), un circuit électrique (20) relié à la borne d'entrée et un limiteur de tension électrique (4), et comprenant un second support (200) portant au moins une borne de connexion extérieure (2), la borne de connexion extérieure étant reliée à la borne d'entrée par un condensateur (3), dans lequel la liaison entre le condensateur et la borne de connexion extérieure comprend un noeud (N) relié au limiteur de tension électrique de façon à limiter une tension électrique entre ledit noeud et un point de référence (M) du circuit électrique.

2. Dispositif selon la revendication 1, dans lequel le condensateur (3) est porté par le second support (200).

3. Dispositif selon la revendication 1 ou 2, dans lequel ledit noeud (N) est relié d'une part au limiteur de tension (4) par une première diode (5) et d'autre part au point de référence (M) par une seconde diode (6), la première diode ayant sa cathode connectée au limiteur de tension et son anode connectée audit noeud, et la seconde diode ayant sa cathode connectée audit noeud et son anode connectée audit point de référence.

4. Dispositif selon l'une quelconque des revendications précédentes, dans lequel le premier support (100) est à base de silicium.

5. Dispositif selon les revendications 3 et 4, dans lequel les première (5) et seconde (6) diodes sont portées par le premier support (100).

6. Dispositif selon l'une quelconque des revendications précédentes, dans lequel le second support (200) est en matériau isolant électrique.

7. Dispositif selon la revendication 6, dans lequel le second support est en verre.

8. Dispositif selon la revendication 2, dans lequel le condensateur (3) comprend deux portions de couches métalliques superposées formées à la surface du second support (200) et au moins une portion de couche diélectrique isolante disposée entre lés deux portions de couches métalliques.

9. Dispositif selon l'une quelconque des revendications 2 à 8, dans lequel une première liaison conductrice reliant la borne d'entrée (1) au condensateur (3) comprend une piste métallique (7) formée à la surface du second support (200).

10. Dispositif selon l'une quelconque des revendications 2 à 9, dans lequel une seconde liaison conductrice reliant ledit noeud (N) à un point porté par le premier support (100) comprend une piste métallique (8) formée à la surface du second support (200).

11. Dispositif selon l'une quelconque des revendications 3 à 10, comprenant au moins une autre borne d'entrée (9) reliée d'une part au limiteur de tension (4) par une troisième diode (12) et d'autre part au point de référence (M) par une quatrième diode (13), la troisième diode ayant sa cathode connectée au limiteur de tension et son anode connectée à ladite autre borne d'entrée (9), et la quatrième diode ayant sa cathode connectée à ladite autre borne d'entrée (9) et son anode connectée audit point de référence.

12. Dispositif selon l'une quelconque des revendications 3 là 11, dans lequel ladite borne d'entrée (1) est reliée d'une part au limiteur de tension (4) par une cinquième diode (10) et d'autre part au point de référence (M) par une sixième diode (11), la cinquième diode ayant sa cathode connectée au limiteur de tension et son anode connectée à ladite borne d'entrée (1), et la sixième diode ayant sa cathode connectée à ladite borne d'entrée (1) et son anode connectée audit point de référence.

## Claims

1. Electrical device comprising a first support (100) bearing at least one input terminal (1), an electric circuit (20) connected to the input terminal and a voltage limiter (4), and comprising a second support (200) bearing at least one external connection terminal (2), the external connection terminal being connected to the input terminal via a capacitor (3), wherein the connection between the capacitor and the external connection terminal comprises a node (N) connected to the voltage limiter so as to limit a voltage between said node and a reference point (M) of the electric circuit.

2. Device according to Claim 1, wherein the capacitor (3) is borne by the second support (200).

3. Device according to Claim 1 or 2, wherein said node (N) is connected, on the one hand, to the voltage limiter (4) by a first diode (5) and, on the other hand, to the reference point (M) by a second diode (6), the first diode having its cathode connected to the voltage limiter and its anode connected to said node, and the second diode having its cathode connected to said node and its anode connected to said reference point.

4. Device according to any one of the preceding claims, wherein the first support (100) is silicon-based.

5. Device according to Claims 3 and 4, wherein the first (5) and second (6) diodes are borne by the first support (100).

6. Device according to any one of the preceding claims, wherein the second support (200) is made of an electrical insulator.

7. Device according to Claim 6, wherein the second support is made of glass.

8. Device according to Claim 2, wherein the capacitor (3) comprises two superimposed metal layer portions formed on the surface of the second support (200) and at least one insulating dielectric layer portion placed between the two metal layer portions.

9. Device according to any one of Claims 2 to 8, wherein a first conducting connection connecting the input terminal (1) to the capacitor (3) comprises a metal track (7) formed on the surface of the second support (200).

10. Device according to any one of Claims 2 to 9, wherein a second conducting connection connecting said node (N) to a point borne by the first support (100) comprises a metal track (8) formed on the surface of the second support (200).

11. Device according to any one of Claims 3 to 10, comprising at least one other input terminal (9) connected, on the one hand, to the voltage limiter (4) by a third diode (12) and, on the other hand, to the reference point (M) by a fourth diode (13), the third diode having its cathode connected to the voltage limiter and its anode connected to said other input terminal (9), and the fourth diode having its cathode connected to said other input terminal (9), and its anode connected to said reference point.

12. Device according to any one of Claims 3 to 11, wherein said input terminal (1) is connected, on the one hand, to the voltage limiter (4) by a fifth diode (10) and, on the other hand, to the reference point (M) by a sixth diode (11), the fifth diode having its cathode connected to the voltage limiter and its anode connected to said input terminal (1), and the sixth diode having its cathode connected to said input terminal (1) and its anode connected to said reference point.

## Patentansprüche

1. Elektrische Vorrichtung umfassend einen ersten Träger (100), welcher wenigstens eine Eingangsklemme (1), eine elektrische Schaltung (20), welche mit der Eingangsklemme verbunden ist, und einen elektrischen Spannungsbegrenzer (4) trägt, und umfassend einen zweiten Träger (200), welcher wenigstens eine äußere Anschlussklemme (2) trägt, wobei die äußere Anschlussklemme mit der Eingangsklemme durch einen Kondensator (3) verbunden ist, wobei die Verbindung zwischen dem Kondensator und der äußeren Anschlussklemme einen Knoten (N) umfasst, der mit dem elektrischen Spannungsbegrenzer derart verbunden ist, dass eine elektrische Spannung zwischen dem Knoten und einem Bezugspunkt (M) der elektrischen Schaltung begrenzt wird.

2. Vorrichtung gemäß Anspruch 1, wobei der Kondensator (3) von dem zweiten Träger (200) getragen wird.

3. Vorrichtung gemäß Anspruch 1 oder 2, wobei der Knoten (N) einerseits durch eine erste Diode (5) mit dem Spannungsbegrenzer (4) und andererseits durch eine zweite Diode (6) mit dem Bezugspunkt (M) verbunden ist, wobei die Kathode der ersten Diode mit dem Spannungsbegrenzer verbunden ist und die Anode der ersten Diode mit dem Knoten verbunden ist, und wobei die Kathode der zweiten Diode mit dem Knoten verbunden ist und die Anode der zweiten Diode mit dem Bezugspunkt verbunden ist.

4. Vorrichtung gemäß irgendeinem der vorhergehenden Ansprüche, wobei der erste Träger (100) auf Siliziumbasis vorliegt.

5. Vorrichtung gemäß einem der Ansprüche 3 und 4, wobei die erste Diode (5) und die zweite Diode (6) von dem ersten Träger (100) getragen werden.

6. Vorrichtung gemäß irgendeinem der vorhergehenden Ansprüche, wobei der zweite Träger (200) aus einem elektrisch isolierenden Material besteht.

7. Vorrichtung gemäß Anspruch 6, wobei der zweite Träger aus Glas besteht.

8. Vorrichtung gemäß Anspruch 2, wobei der Kondensator (3) zwei Teile aus übereinander liegenden Metallschichten, die an der Oberfläche des zweiten Trägers (200) ausgebildet sind, und wenigstens einen Teil aus einer dielektrischen isolierenden Schicht, die zwischen den beiden Metallschichten angeordnet ist, umfasst.

9. Vorrichtung gemäß irgendeinem der Ansprüche 2 bis 8, wobei eine erste leitende Verbindung, welche die Eingangsklemme (1) mit dem Kondensator (3) verbindet, eine erste Metallspur (7) umfasst, die an der Oberfläche des zweiten Trägers (200) ausgebildet ist.

10. Vorrichtung gemäß irgendeinem der Ansprüche 2 bis 9, wobei eine zweite leitende Verbindung, welche den Knoten (N) mit einem Punkt verbindet, der von dem ersten Träger (100) getragen wird, eine Metallspur (8) umfasst, die an der Oberfläche des zweiten Trägers (200) ausgebildet ist.

11. Vorrichtung gemäß irgendeinem der Ansprüche 3 bis 10, umfassend wenigstens eine weitere Eingangsklemme (9), die einerseits durch eine dritte Diode (12) mit dem Spannungsbegrenzer (4) verbunden ist, und andererseits durch eine vierte Diode (13) mit dem Bezugspunkt (M) verbunden ist, wobei die Kathode der dritten Diode mit dem Spannungsbegrenzer verbunden ist und die Anode der dritten Diode mit der weiteren Eingangsklemme (9) verbunden ist, und wobei die Kathode der vierten Diode mit der weiteren Eingangsklemme (9) verbunden ist und die Anode der vierten Diode mit dem Bezugspunkt verbunden ist.

12. Vorrichtung gemäß irgendeinem der Ansprüche 3 bis 11, wobei die Eingangsklemme (1) einerseits durch eine fünfte Diode (10) mit dem Spannungsbegrenzer (4) verbunden ist, und andererseits durch eine sechste Diode (11) mit dem Bezugspunkt (M) verbunden ist, wobei die Kathode der fünften Diode mit dem Spannungsbegrenzer verbunden ist und die Anode der fünften Diode mit der Eingangsklemme (1) verbunden ist, und wobei die Kathode der sechsten Diode mit der Eingangsklemme (1) verbunden ist und die Anode der sechsten Diode mit dem Bezugspunkt verbunden ist.
